# EUROPÄISCHE PATENTSCHRIFT

(11) **EP 2 174 943 B1**
(45) Veröffentlichungstag und Bekanntmachung des Hinweises auf die Patenterteilung: **22.06.2011**
(21) Anmeldenummer: 09176233.6
(22) Anmeldetag: 18.01.2008
(51) Int. Cl.: C07F 9/09

(54) **Herstellung von phosphorhaltigen Propoxylierungsprodukten durch Verwendung von Aluminiumtrichlorid**
Production of propoxylated products containing phosphorous through use of aluminium trichloride
Fabrication de produits de propoxylation contenant du phosphore en utilisant du trichlorure d'aluminium

(30) Priorität: 02.02.2007 DE 102007005273; 09.02.2007 DE 102007006494
(43) Veröffentlichungstag der Anmeldung: 14.04.2010
(62) Teilanmeldung aus: 08100618.1
(73) Patentinhaber: LANXESS Deutschland GmbH, 51369 Leverkusen (DE)
(72) Erfinder: Weiß, Thomas, 68549, Ilvesheim (DE); Elbert, Rainer, 51469, Bergisch Gladbach (DE)

(56) Entgegenhaltungen:
- EP-A- 1 702 923
- US-A- 2 610 978
- GUTMANN V.: "Verbindungen des Phosphoroxychlorids und das Verhalten ihrer Lösungen" Z.ANORG. ALLG. CHEM., Nr. 269, 1952, Seiten 279-291, XP002507678
- BOGHOSIAN, S. ET AL: "Characterization of vapor complexes over molten phosphoryl chloride-aluminum or gallium chloride mixtures: Raman spectra and thermodynamics" POLYHEDRON , 12(7), 771-82 CODEN: PLYHDE; ISSN: 0277-5387, 1993, XP002507679

## Beschreibung

Die Erfindung betrifft ein Verfahren zur Herstellung von phosphorhaltigen Propoxylierungsprodukten mit einem vorteilhaften Isomerenverhältnis mittels Aluminiumchlorid als Katalysator, sowie deren Verwendung als Polymeradditiv, beispielsweise als Flammschutzmittel, in Polyurethanen.

Die Herstellung von phosphorhaltigen Alkoxylierungsprodukten, insbesondere von organischen Phosphonaten und halogensubstituierten Alkylphosphaten ist dem Fachmann bekannt. Es werden vor allem Phosphorsäure, phosphorige Säure oder Phosphortrihalogenid, bevorzugt Phosphortrichlorid oder Phosphoroxihalogenid, insbesondere Phosphoroxichlorid, eingesetzt und mit Epoxiden wie Ethylenoxid, Propylenoxid und/oder Epichlorhydrin umgesetzt. Zur Erhöhung der Reaktionsgeschwindigkeit werden häufig Katalysatoren eingesetzt. Für homogen arbeitende Katalysatoren sind dem Fachmann viele Varianten bekannt.

Im Allgemeinen müssen die erhaltenen alkoxylierten Produkte mehrstufig bei unterschiedlichen pH-Werten gereinigt werden. Die Nachbehandlung wird meist durch eine wässrige Aufarbeitung der rohen Reaktionsprodukte erreicht, wobei der Katalysator irreversibel zerstört und abgetrennt wird. Derartige Nachbehandlungen zur Zerstörung bzw. Inaktivierung des Katalysators haben jedoch Nachteile. Sie erfordern zusätzlich Reaktoren. Es kommt zu einer Verschlechterung der Raum-ZeitAusbeute und es treten Produktverluste auf. Die anfallenden Waschwässer müssen aufwändig entsorgt werden.

Dies wird beispielsweise in DD 125 035 beschrieben, wobei Inaktivierung bzw. Zerstörung des dort eingesetzten Titanhalogenid-Katalysators durch Zugabe einer stöchiometrischen Wassermenge oder Wäsche der phosphorhaltigen Alkoxylierungsprodukte mit Wasser oder Alkalien erreicht wird.

Die Verwendung von unterschiedlichen Katalysatoren in der Reaktion von Phosphoroxychlorid mit höheren Alkylenoxiden wie Propylenoxid führt in der Regel zu einem Diastereomerengemisch der Tris(chlorpropyl)phosphate [im nachfolgenden TCPP genannt]. Dabei wird der Oxiranring in Propylenoxid unter Bildung von TCPP geöffnet. Die Wahl des Katalysators hat dabei entscheidenden Einfluss auf das Verhältnis der TCPP-Isomeren (I) bis (IV) zueinander (siehe unten). Darüber hinaus kann durch die Wahl des Katalysators auch das Nebenproduktspektum, wie beispielsweise Chlorpropanole, TCPP-Ether (TCPP-Ether = Phosphate gemäß I-IV mit chlorierten Polyetherfunktionen anstelle von Chlorpropyl), 2-Methylpentenal u.a. der Reaktion günstig beeinflusst werden.

In US-A 3 100 220 wird die Verwendung von Titaniumtetrachlorid zur Herstellung von TCPP offenbart. Dabei wird ein TCPP mit einer spezifischen Dichte von 1,294 erhalten. Eine Zusammensetzung der Isomere wird nicht offenbart.

In DE-A 1 921 504 wird ein Verfahren zur Herstellung von Chloralkylesterverbindungen mit 5-bindigem Phosphor offenbart. Dabei wird ein Verfahren zur Herstellung von Chloralkylesterverbindungen mit 5-bindigem Phosphor unter Verwendung von wässrigen Titaniumtrichlorid-Lösungen in Form einer 0,001 Gew.-% salzsauren, wässrigen Lösung von TiCl₃ beansprucht. Eine Isomerenzusammensetzung des TCPP wird nicht offenart.

In US-A 2 610 978 wird die unvorteilhafte Verwendung von Aluminiumtrichlorid beschrieben. Dabei wird erwähnt, dass die Gefahr einer unkontrollierbaren Reaktion zwischen Ethylenoxid und Phosphoroxyxchlorid durch ausfallenden Katalysator besteht. Die Katalysatorkonzentration wurde zwischen 0,3 % und 1% bezüglich des Reaktionsprodukts offenbart. Ein aus TiCl₄-Katalyse erhaltenes TCPP wurde mit einem Brechungsindex von n_{D}³⁰: 1,4608 beschrieben. Eine Isomerenverteilung des TCPP wurde nicht angegeben.

In EP 0398 095 A2 wird ein Verfahren zur Herstellung von TCPP mittels Verwendung von Titaniumtetrachlorid offenbart. Das Verfahren wird bei einem Phosphoroxichlorid/Propylenoxidverhältnis von 1:3,09 bis 1:3,50 mol/mol bei 80-95 °C und Katalysatorkonzentration von 1,7 bis 2,810⁻³ mol/mol POCl₃ beansprucht. Die Aufarbeitung betrifft eine dreistufige Wasserwäsche bestehend aus Saurer-, Neutral- und Alkali-Wäsche sowie nachfolgender Trocknung des Produkts. Eine genaue Produktanalyse des TCPP wird nicht offenbart.

Die Aufgabe der vorliegenden Erfindung bestand nun darin, ein Verfahren zur Herstellung phosphorhaltiger Alkoxylierungsprodukte unter Verwendung eines Katalysators zu entwickeln, der idealerweise ein optimiertes Isomerenverhältnis mit möglichst geringen Nebenkomponenten und damit besseren Ausbeuten liefert. Ein geringes Nebenkomponentenspektrum, wie beispielsweise der TCPP-Ether-Gehalt, ist im Hinblick auf eine vorteilhafte toxikologische Bewertung von entscheidender Bedeutung. Darüber hinaus sollte das Verfahren mit einem Minimum an nötigen Waschschritten auskommen und damit Ressourcen schonend sein.

Die Lösung der Aufgabe und somit Gegenstand der vorliegenden Erfindung ist ein Verfahren zur Herstellung von säurearmen, phosphorhaltigen Propoxylierungsprodukten mit einem bestimmten Isomereverhältnis durch Umsetzung von Phosphortri- und/oder Phosphoroxihalogeniden mit Alkylenoxiden, dadurch gekennzeichnet, dass man
a) zunächst die Phosphortri- und/oder Phosphoroxihalogenide mit Aluminiumtrichlorid kontinuierlich umsetzt,
b) das Umsetzungsprodukt aus a) in einen Reaktor diskontinuierlich oder kontinuierlich überführt und dort mit Alkylenoxiden zur Reaktion bringt und schließlich
c) das Rohprodukt nach Entfernung von überschüssigem Alkylenoxid einer einfachen Alkalilaugen- Wäsche zuführt.

Überraschenderweise zeigen die mittels Aluminiumchlorid als Katalysator hergestellten phosphorhaltigen Propoxylierungsprodukte ein im Vergleich zum Stand der Technik vorteilhaftes Isomerenverhältnis unter der weitestgehenden Verhinderung der Bildung von Nebenprodukten. Die Vermeidung von Nebenreaktionen, beispielsweise der Bildung von TCPP-Ether, ist dabei in Bezug auf die Ausbeute der Reaktion von besonderem Vorteil, wenn Aluminiumtrichlorid eingesetzt wird.

Es ist überraschend, dass im Fall der erfindungsgemäßen Synthese von TCPP ein Isomerengemisch der Verbindungen (I) bis (IV) erhalten wird 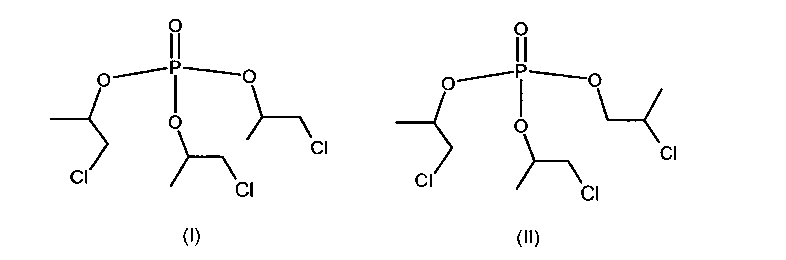 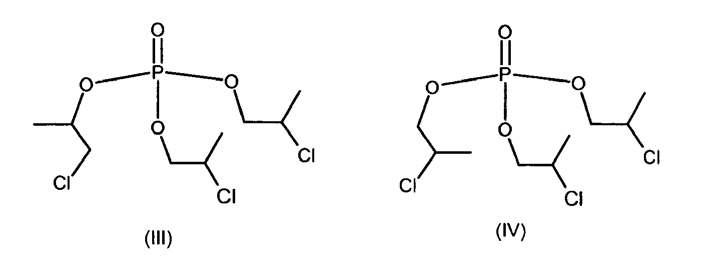 worin das Verhältnis der Isomere (I)/(II) in der Mischung > 4, bevorzugt 4 bis 6, ist. Bei der Verwendung von Aluminiumchlorid liegt das Verhältnis bei > 4, bevorzugt 4 bis 6, und der TCPP-Ethergehalt bei 0,01 bis 0,99 %. Das Isomerenverhältnis kann dabei durch Temperatur und Katalysatorgehalt beeinflusst werden. Im Vergleich dazu liegt das Verhältnis der Isomere (I)/(II) bei der Verwendung von Titantetrachlorid bei < 4 und der TCPP-Ethergehalt bei 1,5 bis 2,9 %.

In einer bevorzugten Ausführungsform betrifft das erfindungsgemäße Verfahren die Synthese von Tri(chlorpropyl)phopsphat (TCPP) bzw. des Gemisches seiner Konfigurationsisomeren, nämlich (MeCHClCH₂O)₃PO (I), (ClCH₂CH₂CH₂O)(MeCHClCH₂O)PO(II), (ClCH₂CH₂CH₂OHMeCHClCH₂O)PO (III), (ClCH₂CH₂CH₂O)₃PO (IV).

Bevorzugt liegt das Verhältnis der Isomere (I)/(II) im TCPP-Isomerengemisch bei 4 bis 6 und der Anteil von Isomer (I) bei 70 bis 90 %. Insbesondere bevorzugt wird dieses Verhältnis durch den Einsatz von Aluminiumtrichlorid erzielt. Alle %-Angaben in der vorliegenden Anmeldung bedeuten Gew.-%.

Als phosphorhaltige Edukte werden im erfindungsgemäßen Verfahren vorzugsweise Phosphortri- und/oder Phosphoroxihalogenide, insbesondere Phosphortrichlorid und/oder Phosphoroxichlorid, eingesetzt und einzeln oder im Gemisch untereinander in Gegenwart von Aluminiumtrichlorid mit den Alkylenoxiden zur Reaktion gebracht. Beispiele für Alkylenoxide sind Ethylenoxid, Propylenoxid, Styroloxid, Cyclohexenoxid, Cyclopentenoxid, Glycidylether, Epichlorhydrin, epoxidiertes Polybutadien, epoxidierte ungesättigte Öle. Dabei können die Alkylenoxide auch im Gemisch untereinander mit den Phosphortri- und/oder Phosphoroxihalogeniden eingesetzt werden. Auf diese Weise können phosphorhaltige Alkoxylierungsprodukte wie z.B. Tri(chlorpropyl)phosphat (TCPP), Tri(chlorethyl)phosphat (TCEP) Tri(chlorpropyl)phosphit oder Tri(chlorethyl)phosphit erhalten werden.

In einer bevorzugten Ausführungsform wird in Schritt b) als Alkylenoxid Propylenoxid und/oder Ethylenoxid eingesetzt.

Die Durchführung des Schrittes b) und des gegebenenfalls durchzuführenden Schrittes c) ist dem Fachmann bekannt, beispielsweise aus Methoden der Organischen Chemie, Houben-Weyl, Bd. 12/2 S. 336-339.

Das erfindungsgemäße Verfahren zur Herstellung von phosphorhaltigen Alkoxylierungsprodukten mittels Aluminiumchlorid als Katalysator kann sowohl kontinuierlich als auch diskontinuierlich durchgeführt werden. Bedingt durch den Schritt a) wird das Verfahren bevorzugt kontinuierlich durchgeführt. Bevorzugt wird das Aluminiumtrichlorid vor der Umsetzung von Phosphortri- und/oder Phosphoroxihalogenid mit Alkylenoxiden in einem Lösebehälter mit den Phosphortri- und/oder Phosphoroxihalogeniden in Kontakt gebracht und das dabei gebildete Umsetzungsprodukt POCl₃ AlCl₃ (Z. Anorg. Allg. Chem. 1952, 269, 279) zusammen mit überschüssigem Phosphortri- und/oder Phosphoroxihalogenid dem Reaktor für die Umsetzung mit einem Alkylenoxid zugeführt. Die Temperatur beim Lösevorgang des Aluminiumtrichlorids in Schritt a) sollte im Bereich von 0 bis 200°C, bevorzugt 10 bis 150°C, besonders bevorzugt 15 bis 100°C liegen.

Die Durchflussrate von Phosphortri- und/oder Phosphoroxihalogenid am Aluminiumkatalysator hängt von der Durchführung der Stufe b) ab, sollte aber um eine kontinuierliche Fahrweise zu gewährleisten bei 100 1/h bis 1000 1/h, insbesondere 200 1/h bis 500 1/h liegen. Nach Abschluss der Stufe a) liegt der Aluminiumtrichloridgehalt der Reaktionslösung im Bereich von 10 bis 10000 ppm , bevorzugt im Bereich von 1000 bis 3000 ppm.

Wie bereits oben beschrieben ist die Durchführung der Stufe b) dem Fachmann bekannt. Diese wird bei Temperaturen von 0 bis 100°C durchgeführt. Vorzugsweise liegen die Reaktionstemperaturen zwischen 50 bis 80°C. Die Reaktion erfolgt drucklos oder unter leichtem Überdruck von bis zu 1 MPa. Das Reaktionsgemisch aus der Stufe a) wird im Reaktionsgefäß vorgelegt und das Alkylenoxid kontinuierlich eindosiert. Das Reaktionsmedium kann durch Zugabe von phosphorhaltigen Alkoxylierungsprodukten mit einem der Reaktionspartner oder davon getrennt verdünnt werden. Nach dem Ende der Alkylenoxiddosierung wird bei Temperaturen von 60 bis 130°C eine Nachreaktionsphase angeschlossen und abschließend werden durch eine Vakuumdestillation bzw. ein Stickstoffstripping bei Temperaturen von 90 bis 150°C und Drücken von bis zu < 0,05 MPa leichtflüchtige Verunreinigungen entfernt. Vorzugsweise erfolgt die Entfernung von leichtflüchtigen Bestandteilen bei ca. 130°C und ca. 40 mbar.

Weitere Vorteile des erfindungsgemäßen Verfahrens auf Basis von Aluminiumchlorid als Katalysator liegen in der einfachen Abtrennbarkeit des Katalysators von den Reaktionsprodukten. Dabei wird von der Eigenschaft Gebrauch gemacht, dass Aluminiumionen (Al³⁺) in Alkaliwäschen in Form von löslichen Aluminumkomplexen z.B. [Al(OH)₄]⁻ löslich sind. Hingegen müssen bei anderen Katalysatoren -in der Regel nichtamphoteren Metallsalzen, wie die des Titanium(III) oder Titanium(IV)- zunächst saure Wäschen vorgenommen werden, um die nichtamphoteren Metallionen in eine wasserlösliche Form zu überführen. Anschließend werden in einer Neutralwäsche und einer Alkaliwäsche saure Bestandteile, wie Restsäure insbesondere Bis(chlorpropyl)phosphorsäure wieder neutralisiert, um ein säurefreies Endprodukt zu erhalten. Im Gegensatz dazu gelingt es durch den Einsatz von Aluminiumtrichlorid in einem Schritt das Metallsalz und die Neutralisierung durchzuführen. Somit kann auf eine aufwändige mehrstufige Wäsche Ressourcen schonend verzichtet werden. Gleichzeitig werden reinere Produkte und weniger belastete Abwässer erhalten. Die vorliegende Erfindung betrifft aber auch säurearme, phosphorhaltige Propoxylierungsprodukte mit einem bestimmten Isomerenverhältnis erhältlich durch Umsetzung von Phosphortri- und/oder Phosphoroxihalogeniden mit Alkylenoxiden, dadurch gekennzeichnet, dass man
a) zunächst die Phosphortri- und/oder Phosphoroxihalogenide mit Aluminiumtrichlorid kontinuierlich umsetzt,
b) das Umsetzungsprodukt aus a) in einen Reaktor diskontinuierlich oder kontinuierlich überführt und dort mit Alkylenoxiden zur Reaktion bringt und schließlich
c) das Rohprodukt nach Entfernung von überschüssigem Alkylenoxid einer einfachen Alkalilaugen- Wäsche zuführt.

Schließlich betrifft die vorliegende Erfindung die Verwendung von Aluminiumchlorid zur Herstellung säurearmer, phosphorhaltiger Propoxylierungsprodukte mit einem bestimmten Isomereverhältnis, dadurch gekennzeichnet, dass man
a) zunächst die Phosphortri- und/oder Phosphoroxihalogenide mit Aluminiumtrichlorid kontinuierlich umsetzt,
b) das Umsetzungsprodukt aus a) in einen Reaktor diskontinuierlich oder kontinuierlich überführt und dort mit Alkylenoxiden zur Reaktion bringt und schließlich
c) das Rohprodukt nach Entfernung von überschüssigem Alkylenoxid einer einfachen Alkalilaugen- Wäsche zuführt.

### Beispiele

### Beispiel 1: Synthese von Tris(chlorpropyl)phosphat (TCPP)

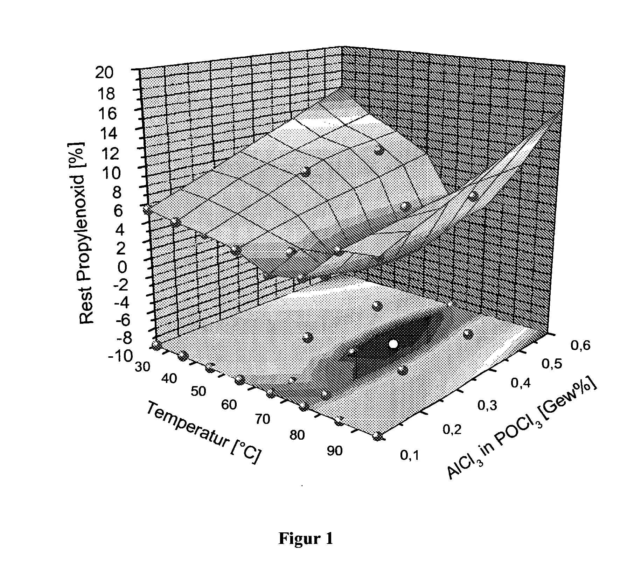

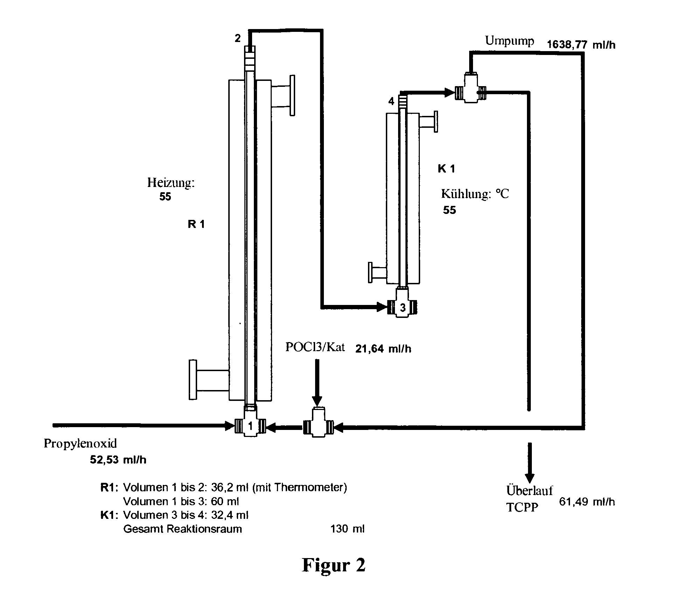

In dem auf einem mit Tris(chlorpropyl)phosphat gefüllten Reaktor (Figur 2) wurden kontinuierlich Propylenoxid (52,5 ml/h) und Aluminiumtrichlorid gelöst in Phosphoroxichlorid (21,6 ml/h) dosiert. Die Reaktion wurde mit einer Umpumpgeschwindigkeit von 1638 ml/h durchgeführt. Die Katalysatorkonzentration wurde dabei wie die Reaktionstemperatur variiert. Es wurden nach einer Laufzeit von 6 h Proben aus dem ablaufendem Tris(chlorpropyl)phosphat entnommen und die Produktzusammensetzung gaschromatografisch analysiert. Tabelle 1 zeigt die Abhängigkeit des Umsatzes der Reaktion gemessen als Rest-Propylenoxid (GC%) und die Abhängkeit der Isomerenzusammensetzung von der Kataylsatorkonzentration und der Reaktionstemperatur. Die grafische Darstellung des Propylenumsatzes aus Tabelle 1 ist Figur 1 zu entnehmen.

**Tabelle 1:**

| **Temperatur [°C]** | **Gew.-% AlCl₃ in POCl₃** | **GC% Rest Propylenoxid** | **(I)*** | **(II)*** | **Verhältnis (I)/(II)** | **(III)*** | **(IV)*** | **TCPP-Ether*** |
|---|---|---|---|---|---|---|---|---|
| 55 | 0,15 | 13,1 | 81,0 | 17,6 | 4,58 | 1,2 | 0,02 | 0,18 |
| 65 | 0,15 | 3,6 | 82,0 | 16,6 | 4,95 | 1,2 | 0,03 | 0,16 |
| 75 | 0,15 | 2,3 | 80,5 | 17,9 | 4,50 | 1,4 | 0,03 | 0,16 |
| 65 | 0,30 | 0,1 | 81,8 | 16,8 | 4,85 | 1,3 | 0,03 | 0,09 |
| 65 | 0,60 | 2,4 | 80,6 | 17,6 | 4,57 | 1,4 | 0,04 | 0,36 |
| 25 | 0,10 | 5,4 | 83,2 | 15,7 | 5,30 | 1,0 | 0,00 | 0,12 |
| 35 | 0,10 | 4,8 | 84,2 | 14,9 | 5,66 | 0,9 | 0,00 | 0,00 |
| 45 | 0,10 | 4,4 | 83,2 | 15,8 | 5,27 | 0,9 | 0,00 | 0,12 |
| 55 | 0,10 | 3,7 | 82,0 | 16,7 | 4,92 | 1,2 | 0,00 | 0,12 |
| 65 | 0,10 | 2,2 | 80,9 | 17,7 | 4,56 | 1,3 | 0,00 | 0,11 |
| 75 | 0,10 | 2,9 | 79,5 | 18,9 | 4,21 | 1,5 | 0,00 | 0,11 |
| 85 | 0,10 | 6,4 | 76,1 | 21,5 | 3,54 | 2,0 | 0,12 | 0,24 |
| 95 | 0,10 | 6,8 | 71,2 | 24,9 | 2,86 | 2,9 | 0,15 | 0,74 |
| 50 | 0,30 | 9,0 | 81,8 | 16,5 | 4,94 | 1,2 | 0,03 | 0,44 |
| 50 | 0,50 | 9,3 | 80,7 | 17,3 | 4,65 | 1,4 | 0,04 | 0,59 |
| 80 | 0,30 | 7,4 | 79,4 | 18,4 | 4,32 | 1,6 | 0,04 | 0,61 |
| 80 | 0,50 | 6,1 | 78,2 | 19,0 | 4,08 | 1,7 | 0,05 | 0,99 |

| | | | | | | | | |
|---|---|---|---|---|---|---|---|---|
| * relative Anteile, normiert ohne Propylenoxid. | | | | | | | | |

### Beispiel 2 Synthese von Tris(chlorpropyl)phosphat (TCPP)

In dem auf einem mit Tris(chlorpropyl)phosphat gefüllten Reaktor (Figur 2) wurden kontinuierlich Propylenoxid (52,5 ml/h) und der Katalysator Titaniumtetrachlorid bzw. Aluminiumchlorid gelöst in Phosphoroxichlorid (21,6 ml/h) dosiert. Die Reaktion wurde mit einer Umpumpgeschwindigkeit von 1638 ml/h in Reaktor 1 durchgeführt. Die Katalysatorkonzentration wurde dabei wie die Reaktionstemperatur variiert. Nach 6 h wird jeweils eine Probe von 250 ml Tris(chlopropyl)phosphat entnommen. Nach Entfernung flüchtiger Bestandteile im Vakuum am Rotationsverdampfer (80°C, 15 mbar, 0,5h) wurde die Produktzusammensetzung gaschromatografisch (GC) analysiert (Tabelle 2).

Anschließend wurden die Produkte in einer dreistufigen Wasserwäsche gereinigt. Dazu wurde die Probe mit 250 ml einer 5 molaren HCl im Verhältnis Vol/Vol 1:1 1 bei 90 °C vermengt. Nach Phasentrennung wurde die organische Phase mit Wasser, 0,2 m Natronlauge und erneut mit Wasser jeweils im Verhältnis Vol/Vol 1: 1 bei 90°C gewaschen. Nach Phasenseparation wurden die Produkte am Rotationsverdampfer 2 h bei 80°C und 15 mbar getrocknet und gaschromatografisch analysiert sowie deren physikalische Parameter erfasst (Tabelle 3).

**Tabelle 2:**

| **Temp. [°C]** | **AlCl₃ [Mol%] in POCl3** | **TilCl₄ [Mol%] in POCl3** | **Propylenoxid** | **(I)** | **(II)** | **(III)** | **(IV)** | **Verhältnis (I)/(II)** | **TCPP-Ether** | **2-Methylpentenal** |
|---|---|---|---|---|---|---|---|---|---|---|
| 55 | 0,52 | - | 0,1 | 81,0 | 16,7 | 1,3 | 0,04 | 4,9 | 0,3 | 0,07 |
| 50 | 0,52 | - | 0,0 | 81,5 | 16,4 | 1,2 | 0,03 | 5,0 | 0,2 | 0,05 |
| 40 | 0,52 | - | 0,1 | 82,1 | 15,7 | 1,1 | 0,03 | 5,2 | 0,2 | 0,06 |
| 55 | 0,34 | - | 0,1 | 81,5 | 16,2 | 1,2 | 0,03 | 5,0 | 0,1 | 0,06 |
| 55 | 0,11 | - | 0,1 | 82,5 | 15,9 | 1,1 | 0,02 | 5,2 | 0,1 | 0,02 |
| 65 | 0,11 | - | 0,0 | 78,0 | 18,3 | 1,6 | 0,05 | 4,3 | 0,4 | 0,04 |
| 65 | - | 0,52 | 0,1 | 69,7 | 23,0 | 2,8 | 0,13 | 3,0 | 2,3 | 0,15 |
| 50 | - | 0,52 | 0,1 | 73,0 | 21,3 | 2,3 | 0,09 | 3,4 | 1,9 | 0,07 |
| 40 | - | 0,52 | 0,1 | 73,7 | 20,3 | 2,0 | 0,06 | 3,6 | 1,5 | 0,07 |
| 65 | - | 0,34 | 0,1 | 68,0 | 22,6 | 2,9 | 0,13 | 3,0 | 2,6 | 0,17 |
| 65 | - | 0,11 | 0,1 | 57,0 | 21,6 | 2,8 | 0,15 | 2,6 | 2,9 | 0,05 |

**Tabelle 3: Reaktionsbedingungen bei 65°C, 0.34 mol% Katalysator in POCl₃.**

| **Produktspektrum** | **vor Wäsche** | | **nach Wäsche** | |
|---|---|---|---|---|
| GC [%] | **Vergleichsbeispiel: TiCl₄** | **AlCl₃** | **Vergleichsbeispiel: TiCl₄** | **AlCl₃** |
| Propylenoxid | 0,1 | 0,09 | < 0,01 | 0 |
| 2-Chlorpropanol | 0,6 | 0,26 | < 0,01 | 0 |
| 1,2-Dichlorpropan | 0,1 | 0,02 | | 0 |
| 2-Methyl-2-pentenal | 0,2 | 0,08 | 0,1 | 0,04 |
| OP(OIso)₃ (I) | 65,3 | 78,82 | 66,5 | 79,15 |
| OP(OIso)₂(ON) (II) | 26,3 | 18,52 | 26,1 | 18,68 |
| OP(Olso)(ON)₂ (III) | 4,0 | 1,57 | 3,9 | 1,59 |
| OP(ON)₃(IV) | 0,2 | 0,05 | 0,3 | 0,05 |
| TCPP-Ether | 2,4 | 0,29 | 2,9 | 0,31 |
| Rest | 0,9 | 0,4 | | |
| Säurezahl | mgKOH/g | | 0,01 | 0,005 |
| Hazenfarbz. | | | 20 | 15 |
| Wasser | % | | 0,05 | 0,04 |
| Dichte 20°C | g/cm3 | | 1,288 | 1,2914 |
| Brechungsz. | | | 1,464 | 1,4647 |
| Viskosität | mPas·s | | ∼ 90 | 91 |
| Leitwert | µS | | 1 | 0,6 |

### Beispiel 3

### Wäsche von TCPP

Beispiel 2 (Reaktionsbedingungen bei 65°C, 0.34 mol% Katalysator in POCl₃) wurde wiederholt und das Roh-TCPP aus der Aluminiumtrichlorid- bzw. Titaniumtetrachloridkatalyse im Gegensatz zu Beispiel 2 einer einstufigen Wäsche mit 0,2 n NaOH bei 90°C unterzogen. Dazu wurden jeweils 250 ml Roh-TCPP mit dem gleichen Volumen 0,2 n NaOH versetzt. Nach Phasenseparation wurden die organischen Phasen am Rotationsverdampfer 2 h bei 80 °C und 15 mbar getrocknet und gaschromatografisch analysiert (Tabelle 4).

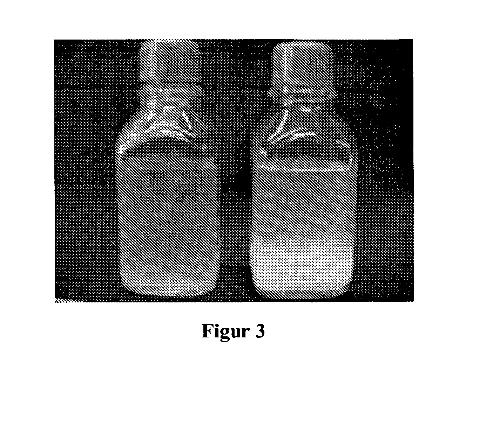

Die Aufarbeitung von TCPP aus der Titaniumkatalyse führte zur Bildung von unlöslichen Bestandteilen in der wässrigen Phase (Figur 3, rechts). Hingegen wurde für das Aluminiumtrichloridkatalysierte TCPP eine transparente, leicht abtrennbare wässrige Phase erhalten (Figur 3, links). Eine Charakterisierung der wässrigen Phase ist in Tabelle 5 angegeben.

**Tabelle 4:**

| **Produktspektrum** | **nach Wäsche** | |
|---|---|---|
| GC [%] | **Vergleichsbeispiel: TiCl₄-TCPP*** | **AlCl₃-TCPP*** |
| Propylenoxid | 0,00 | 0,00 |
| 2-Chlorpropanol | 0,01 | 0,00 |
| 1,2-Dichlorpropan | 0,00 | 0,00 |
| 2-Methyl-2-pentenal | 0,03 | 0,00 |
| OP(OIso)₃ (I) | 67,31 | 79,10 |
| OP(OIso)₂(ON) (II) | 26,09 | 18,66 |
| OP(OIso)(ON)₂ (III) | 3,75 | 1,59 |
| OP(ON)₃ (IV) | 0,19 | 0,05 |
| TCPP-Ether | 2,50 | 0,31 |
| Rest | 0,11 | 0,30 |
| Metallgehalt [ppm]** | < 1 | 2 |

| | | |
|---|---|---|
| *Durchschnittswerte aus jeweils zwei Experimenten; ** Nachweisgrenze: 1 ppm | | |

**Tabelle 5:**

| | **nach Wäsche** | |
|---|---|---|
| Analytische Daten zur wässrigen Phase [ppm] | **Vergleichsbeispiel: TiCl₄-TCPP*** | **AlCl₃-TCPP*** |
| Chlorid (Cl⁻) | 3860 | 1335 |
| Kohenstoff organisch (homgenisiert)** | 3910 | 2170 |
| AOX (adsorbierbare organische Halogene)** | 1650 | 1400 |

| | | |
|---|---|---|
| *Durchschnittswerte aus jeweils zwei Experimenten; ** Nachweisgrenze: 10 ppm | | |

## Patentansprüche

1. Verwendung von Aluminiumchlorid zur Herstellung säureanner, phosphorhaltiger Propoxylierungsprodukte mit einem bestimmten Isomerenverhältnis, **dadurch gekennzeichnet, dass** man ein Produktgemisch mit den Isomeren (I) bis (IV) aus der Reaktion von Phosphoroxichlorid mit Propylenoxid enthält, 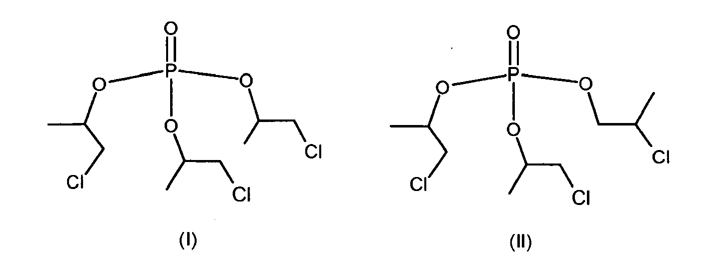 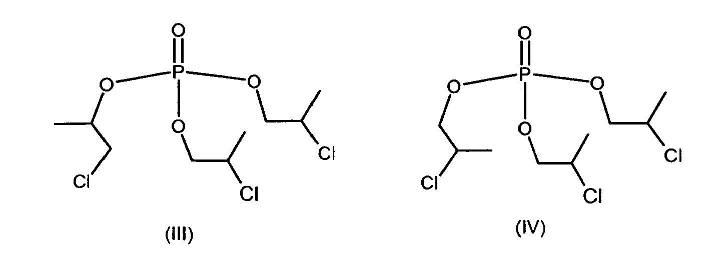 worin das Verhältnis der Isomere (I)/(II) in der Mischung > 4 ist und der Anteil von Isomer (I) im TCPP-Isomerengemisch mindestens 70 % beträgt.

2. Verwendung gemäß Anspruch 1, **dadurch gekennzeichnet, dass** man säurearme, phosphorhaltige Propoxylierungsprodukte mit dem bestimmten Isomerenverhältnis erhält, indem man
a) zunächst die Phosphortri- und/oder Phosphoroxihalogenide mit Aluminiumtrichlorid kontinuierlich umsetzt,
b) das Umsetzungsprodukt aus a) in einen Reaktor diskontinuierlich oder kontinuierlich überführt und dort mit Alkylenoxiden zur Reaktion bringt und schließlich
c) das Rohprodukt nach Entfernung von überschüssigem Alkylenoxid einer einfachen Alkalilaugen- Wäsche zuführt.

## Claims

1. Use of aluminium chloride for preparing phosphorus-containing propoxylation products of low acid content and having a defined isomer ratio, **characterized in that** a product mixture with the isomers (I) to (IV) is obtained from the reaction of phosphorus oxychloride with propylene oxide, 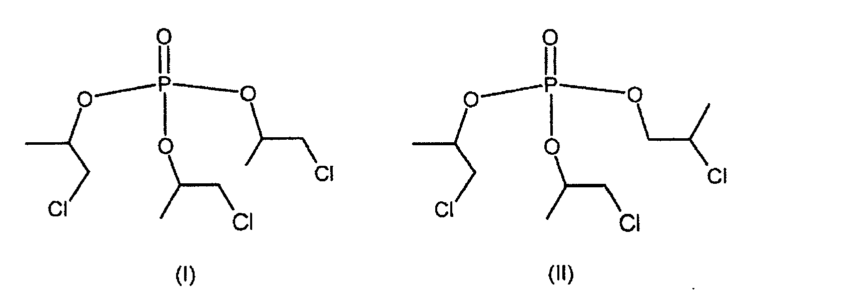 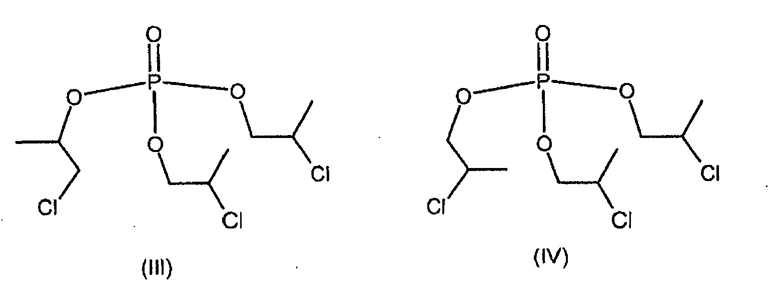 and the ratio of the isomers (I)/(II) in the mixture is > 4 and the fraction of isomer (I) in the TCPP isomer mixture is at least 70%.

2. Use according to Claim 1, **characterized in that** phosphorus-containing propoxylation products of low acid content and having a defined isomer ratio are obtained **in that**
a) first of all the phosphorus trihalides and/or oxyhalides are reacted continuously with aluminium trichloride,
b) the reaction product from a) is transferred batchwise or continuously to a reactor, where it is reacted with alkylene oxides, and finally
c) the crude product, following removal of excess alkylene oxide, is supplied to a single alkali metal hydroxide scrub.

## Revendications

1. Utilisation de chlorure d'aluminium pour la préparation de produits de propoxylation phosphorés, pauvres en acide, ayant un rapport déterminé d'isomères, **caractérisée en ce qu'**à partir de la réaction d'oxychlorure de phosphore avec de l'oxyde de propylène on obtient un mélange de produits comportant les isomères (I) à (IV), 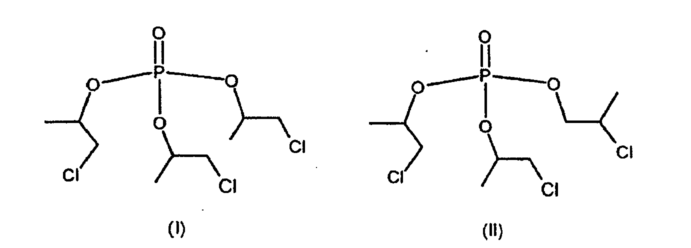 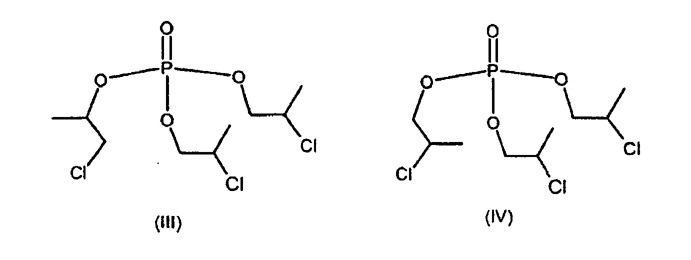 le rapport des isomères (I)/(II) dans le mélange étant > 4 et la proportion de l'isomère (I) dans le mélange d'isomères de TCPP étant au moins de 70 %.

2. Utilisation selon la revendication 1, **caractérisée en ce qu'**on obtient des produits de propoxylation phosphorés, pauvres en acide, ayant un rapport déterminé d'isomères,
a) faisant d'abord réagir en continu les trihalogénures et/ou oxyhalogénures de phosphore avec du trichlorure d'aluminium,
b) en transférant en continu ou en mode discontinu le produit de réaction provenant de a) dans un réacteur et en l'y faisant réagir avec des oxydes d'alkylène et enfin
c) en envoyant le produit brut, après élimination de l'oxyde d'alkylène en excès, à un simple lavage avec une solution alcaline.
